# EUROPÄISCHE PATENTSCHRIFT

(11) **EP 3 163 450 B1**
(45) Veröffentlichungstag und Bekanntmachung des Hinweises auf die Patenterteilung: **08.06.2022**
(21) Anmeldenummer: 16194943.3
(22) Anmeldetag: 20.10.2016
(51) Int. Cl.: G06F 11/34, G06F 11/30, G06F 11/32, G06F 11/36

(54) **VERFAHREN ZUR VERFOLGUNG DES VERLAUFES IN EINEM VERTEILTEN SYSTEM**
METHOD FOR TRACKING THE COURSE IN A DISTRIBUTED SYSTEM
PROCÉDÉ DE SUIVI DU DÉROULEMENT DANS UN SYSTÈME PARTAGÉ

(30) Priorität: 21.10.2015 DE 102015117949
(43) Veröffentlichungstag der Anmeldung: 03.05.2017
(73) Patentinhaber: Sontheim Industrie Elektronik GmbH, 87437 Kempten (DE)
(72) Erfinder: Sontheim, Bruno, 87437 Kempten (DE); Lorenz, Martin, 87437 Kempten (DE); Jovalekic, Silvije, 87437 Kempten (DE); Wiescholek, Michael, 87437 Kempten (DE)
(74) Vertreter: Patentanwaltzkanzlei Hutzelmann

(56) Entgegenhaltungen:
- WISMULLER R ET AL: "Enhanced monitoring in the GRADE programming environment by using OMIS", FUTURE GENERATIONS COMPUTER SYSTEMS, ELSEVIER SCIENCE PUBLISHERS. AMSTERDAM, NL, Bd. 16, Nr. 6, 1. April 2000 (2000-04-01), Seiten 637-648, XP004197222, ISSN: 0167-739X, DOI: 10.1016/S0167-739X(99)00073-4
- ROVER D T ET AL: "VISUALIZING THE PERFORMANCE OF SPMD AND DATA-PARALLEL PROGRAMS", JOURNAL OF PARALLEL AND DISTRIBUTED COMPUTING, ELSEVIER, AMSTERDAM, NL, Bd. 18, Nr. 2, 1. Juni 1993 (1993-06-01), Seiten 129-146, XP000382238, ISSN: 0743-7315, DOI: 10.1006/JPDC.1993.1052
- EICK S G ET AL: "SEESOFT-A TOOL FOR VISUALIZING LINE ORIENTED SOFTWARE STATISTICS", IEEE TRANSACTIONS ON SOFTWARE ENGINEERING, IEEE SERVICE CENTER, LOS ALAMITOS, CA, US, Bd. 18, Nr. 11, 1. November 1992 (1992-11-01), Seiten 957-968, XP000327343, ISSN: 0098-5589, DOI: 10.1109/32.177365
- SCHNORR L M ET AL: "Triva: Interactive 3D visualization for performance analysis of parallel applications", FUTURE GENERATIONS COMPUTER SYSTEMS, ELSEVIER SCIENCE PUBLISHERS. AMSTERDAM, NL, Bd. 26, Nr. 3, 1. März 2010 (2010-03-01), Seiten 348-358, XP026765355, ISSN: 0167-739X, DOI: 10.1016/J.FUTURE.2009.10.006 [gefunden am 2009-10-15]

## Beschreibung

Die Erfindung bezieht sich auf ein Verfahren zur Erfassung des zeitlichen Verhaltens, Verfolgung des Programmverlaufes, des Informationsflusses und/oder des Zusammenspiels von Teilnehmern in einem verteilten System aus programmierbaren Steuerungen und/oder datenverarbeitenden Systemen.

Bislang wurden diese verteilten Systeme durch Eingriffe in den Programmcode "verfolgt". Die in eine Log Datei geschriebenen Daten mussten dann per Hand identifiziert und mit Soll-Werten verglichen werden.

Dies ist jedoch sehr aufwendig und fehleranfällig.

Aus der Publikation "Enhanced monitoring in the GRADE programming environment by using OMIS" veröffentlicht in Future Generation Computer Systems 10 (2000) 637-648, und auch aus der Publikation "Visualizing the Performance of SPMD and Data-Parallel Programs" veröffentlicht in Journal of Parallel and Distributed Computing 18, 129-146 (1993) sind derartige Verfahren bekannt.

Die dort beschriebenen Verfahren nutzen einerseits Quellcode basierte Eingriffe zur Erzeugung der Überwachungsdaten und andererseits automatisierte, auch grafische Verfahren, um diese Daten auszuwerten und so Rückschlüsse auf die Programmabläufe und das Zusammenspiel zu gewinnen.

Auch wenn die Überwachungsdaten softwaregestützt unter Verwendung hardwarenaher Routinen generiert werden, erfolgt eine nicht unwesentliche Beeinflussung des Programmablaufes hierdurch.

Aufgabe der Erfindung ist es, ein Verfahren vorzuschlagen, welches eine sehr schnelle und dedizierte Analyse der gewonnenen Daten, sowie eine sehr schnelle und damit den Ablauf im verteilten System möglichst wenig beeinflussende Datengewinnung vorzuschlagen.

Diese Aufgabe wird erfindungsgemäß dadurch gelöst, daß an zuvor definierten Stellen des Systems Zeitstempel generiert und gespeichert werden, daß die Zeitstempel die jeweilige Uhrzeit, den Ort, den Ereignistyp, eine fortlaufende Nummer und wahlweise andere Angaben enthalten, daß die Zeitstempel hardwarebasiert generiert und in einem Zwischenspeicher abgelegt werden, daß die Zeitstempel ausgelesen werden und softwaregestützt analysiert werden, daß die Zeitstempel eines Systems grafisch aufbereitet und zwei oder dreidimensional dargestellt werden und daß mehr als zwei- bzw. dreidimensionale Zeitstempel auf ein 2D oder 3D System projiziert werden und daß die Zeitstempelgenerierung als atomare Schreib-Operation in der jeweiligen Hardware hinterlegt ist und in ein dafür vorgesehenes Register erfolgt.

Diese Zeitstempel lassen sich beispielsweise als 32bit Zahl speichern, wodurch nur eine geringe Rechenleistung für die Gewinnung und Abspeicherung der Zeitstempel benötigt wird. Es findet nur eine geringe Beeinflussung des verteilten Systems statt. Dennoch sind die gewonnenen Werte aussagekräftig. Jeder Zeitstempel enthält einen kompletten Datensatz um eine Beziehung zur Quelle des Zeitstempels herstellen zu können und diesen auswertbar zu machen.

Eine effiziente Auswertung der in den Zeitstempeln enthaltenen Informationen kann gewährleistet werden. Durch eine grafische Aufbereitung können etwaige Fehlabläufe oder auch anderweitige Fehler schnell erfasst werden. Eine genauere Analyse des jeweiligen Fehlerfalles ist dann möglich, ohne zunächst eine Vielzahl anderer Datenpakete vornehmen zu müssen. Durch eine Projektion können auch mehr als dreidimensionale Systeme auf einfache Art und Weise optisch erfasst werden. Auch die Projektion von 3D Systemen auf 2D Systeme ist denkbar.

Zudem wird ein möglichst geringer Zeitaufwand für die Generierung und das Ablegen des Zeitstempels sichergestellt. Die Beeinflussung des verteilten Systems ist dadurch möglichst gering. Es werden nur geringfügige Verzögerungen verursacht. Im Gegensatz zu softwarebasierte Zeitstempeln, diemeist innerhalb 10 bis 100 Takte generiert und abgelegt werden, sind hardwarebasierte Zeitstempel dagegen deutlich schneller zu erzeugen und abzulegen, nämlich optimaler weise innerhalb eines Taktes. Eine atomare Schreiboperation in der jeweiligen Hardware ist die schnellste Möglichkeit, einen Zeitstempel zu generieren und für die Weiterverarbeitung abzulegen.

Dies alles im Gegensatz zu einer hardwarenah programmierten Zeitstempelgenerierung, bei der Betriebssystemaufrufe umgangen werden, wobei eine Inter-Prozess-Communication vorgesehen sein kann, um Race Conditions zu vermeiden.

Durch die in der jeweiligen Hardware hinterlegten Zeitstempelgenerierung kann darauf verzichtet werden, bei der Inter-Prozess-Kommunikation zum Beispiel Mutex oder bevorzugt Spin-Lock einzusetzen.

Äußerst vorteilhaft ist es in diesem Zusammenhang gemäß einer Fortbildung der Erfindung auch, wenn logisch aufeinander folgende Zeitstempel miteinander verknüpft werden, wobei bei einer grafischen Darstellung eine Verbindung mit Linien vorgenommen werden kann.

Damit ist eine nochmals einfachere und schnellere Aufnahme der wesentlichen, nämlich abweichenden Informationen möglich.

Erfindungsgemäß hat es sich auch als sehr vorteilhaft erwiesen, wenn die Linien und/oder Datenpunkte farblich codiert dargestellt werden.

Damit können sehr leicht zusammengehörige Datenpunkte bzw. Linien erfasst werden. Auch von einem vorgegebenen oder einstellbaren Wert oder Wertekorridor abweichende Datenpunkte lassen sich andersfarbig darstellen um diese Abweichungen leichter erkennen zu können. Es ist denkbar, daß die Linien und/oder Datenpunkte farblich codiert entsprechend ihrer Verarbeitungszeit dargestellt werden, wobei die Regenbogenfarben hierfür verwendet werden können um einen Unterscheidung zwischen kurzer und langer Verarbeitungszeit darzustellen. Damit kann das Laufzeitverhalten sehr gut analysiert werden. Systematische und sporadische Fehler lassen sich erkennen.

Äußerst vorteilhaft ist es erfindungsgemäß auch, wenn die bei der Projektion unberücksichtigt bleibenden Werte und/oder Wertebereiche der weggelassenen Dimensionen auswählbar sind.

Eine weitere, äußerst vorteilhafte Ausgestaltung der Erfindung liegt vor, wenn einzelne Informationen der Zeitstempel projiziert werden.

Im folgenden wird die Erfindung anhand eines Ausführungsbeispiels veranschaulicht.

Dabei zeigen:

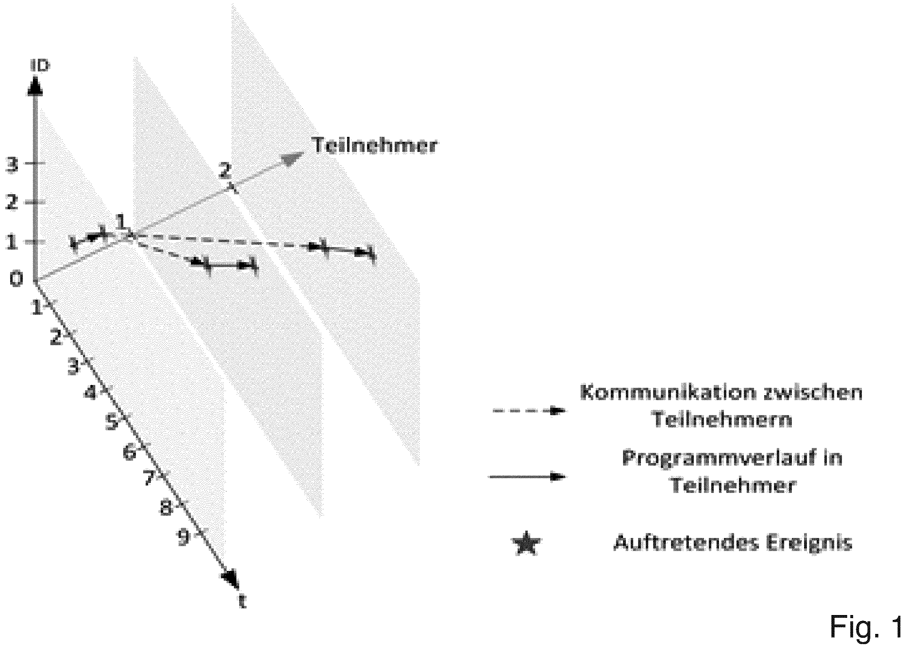

- Fig. 1: eine schematische Darstellung interner Programmabläufe und der Kommunikation zwischen Teilnehmern in einem verteilten Netzwerk,

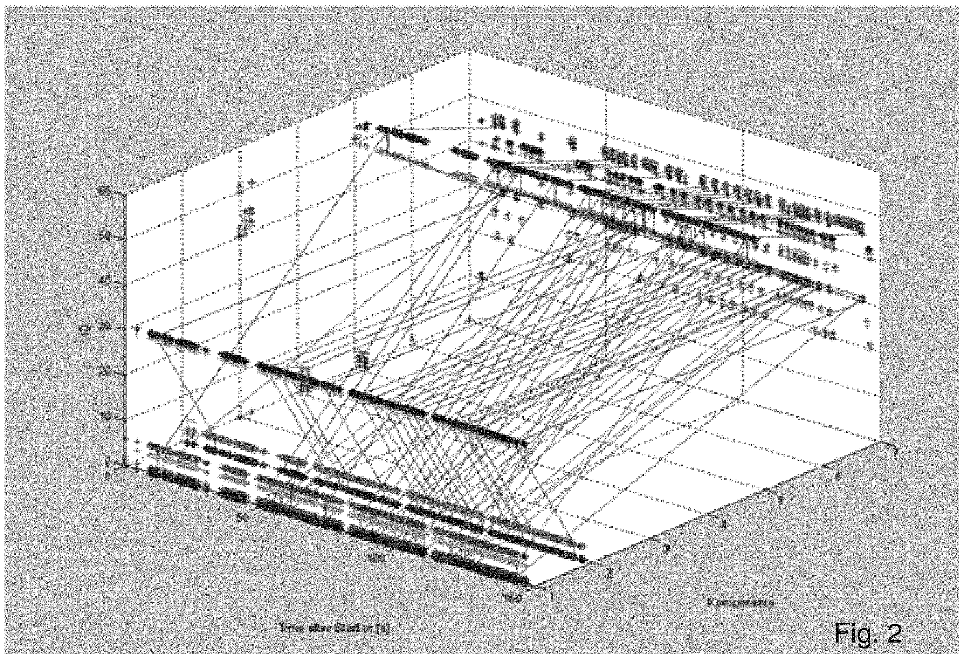

- Fig. 2: eine typische grafische 3D-Darstellung der ermittelten Daten,

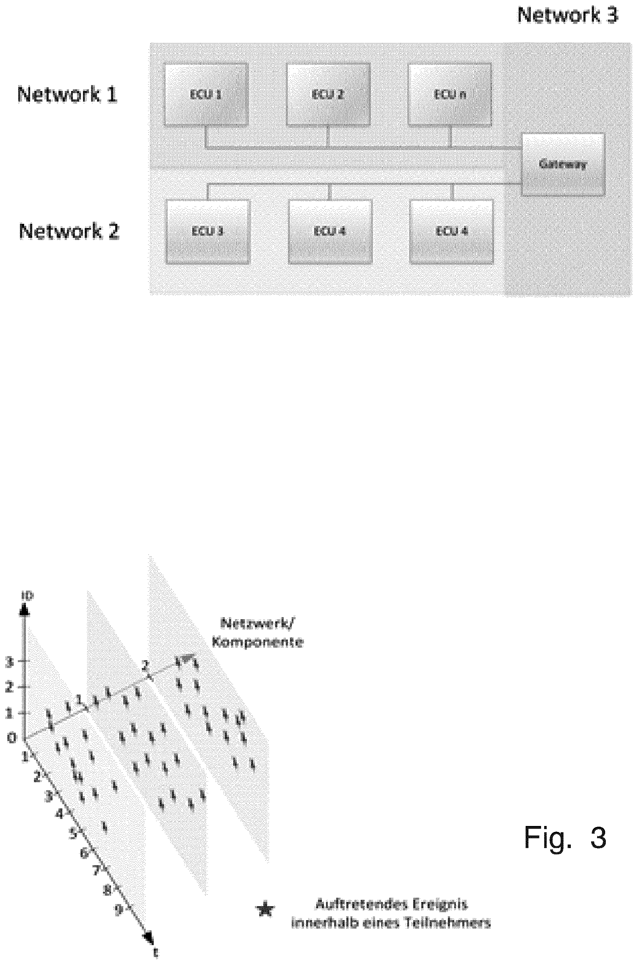

- Fig. 3: eine schematische Darstellung eines verteilten Systems, bestehend aus zwei Subnetzen, die über ein Gateway gekoppelt sind und eine Parallelprojektion der ermittelten Ereignisse, reduziert auf drei Dimensionen, und

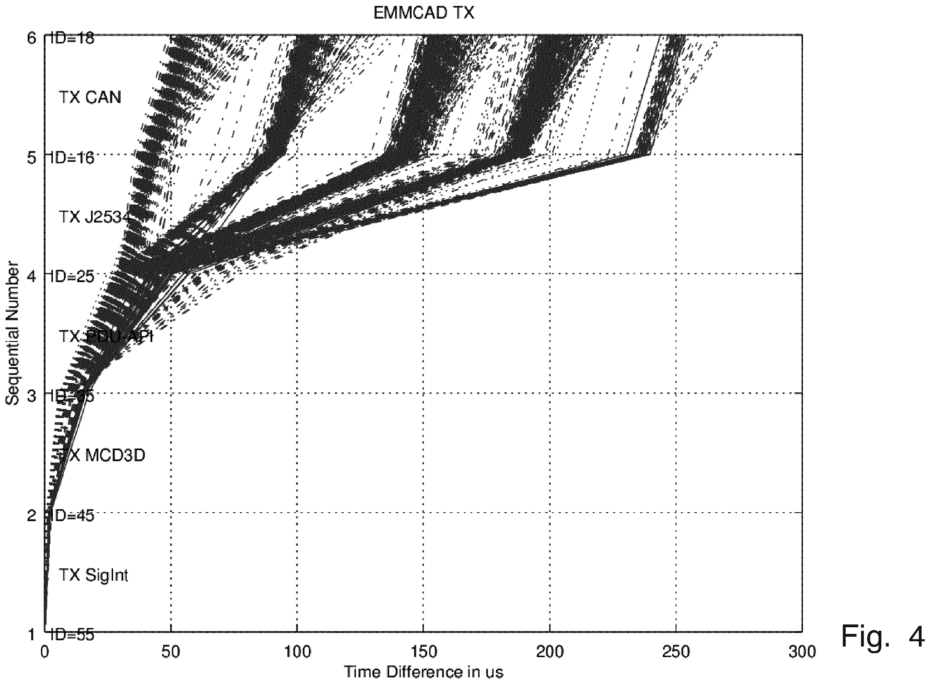

- Fig. 4: eine Darstellung bei der unterschiedliche Verarbeitungszeiten aufgezeigt werden.

Das erfindungsgemäße Verfahren wird genutzt um den Programmverlauf und das Zusammenspiel von Teilnehmern in einem verteilten System zu verstehen und zu analysieren.

Hierzu werden sogenannte Zeitstempel, bestehend zumindest aus der jeweiligen Zeit und einer ID, in den Programmabläufen generiert. Die ID besteht dabei zumindest wiederum aus einer Kennung für den Ereignistyp und den Ort, sowie einer fortlaufenden Nummer.

Weitere Informationen können im Zeitstempel kodiert sein.

Diese Zeitstempel werden in einem Speicher abgelegt und anschließend wieder ausgelesen und analysiert.

Die entsprechenden Programmroutinen zur Generierung eines Zeitstempels und die Ablage in einem Register sind in Hardware vorgesehen, so daß sich eine minimalste Beeinflussung des Laufzeitverhaltens ergibt.

Dies ermöglicht eine möglichst geringe Beeinflussung des Laufzeitverhalten der verteilten Systeme.

In diesem Fall kann beispielsweise jeder Zeitstempel in ein Register geschoben werden, wobei der Zeitstempel beispielsweise eine 32bit Zahl ist, in der alle gewünschten Informationen codiert sind.

Bei den verteilten Systemen handelt es sich meist um Embedded-Systeme, die für verteilte und meist komplexe Steuerungsaufgaben genutzt werden.

Nachdem die Zeitstempel an vorgesehenen Stellen generiert und anschließend ausgelesen wurden, werden diese decodiert.

Die so gewonnenen Datensätze werden dann ausgewertet.

Bei der Auswertung werden die relevanten Daten der jeweiligen Datensätze in einem zwei oder dreidimensionalen System grafisch dargestellt.

Sind mehr wie drei Daten je Datensatz vorhanden, so können entweder die darzustellenden Daten der Datensätze ausgewählt werden, oder aber es werden zwei- oder dreidimensionale Projektionen der Daten erstellt.

Hier haben sich mathematische Projektionsverfahren mit der Abbildungsmatrix (x,y)=A^{∗}(d1,d2,...,dn) bewährt.

Dabei können Werte einzelner Dimensionen, die in der Projektion nicht sichtbar sind, auf einen festen Wert oder einen Wertebereich festgelegt werden, wohingehen andere Dimensionen bliebige Werte aufweisen können.

Bei einer Projektion von 6D(Dimensionen) auf 3D kann beispielsweise die Abbildung (x,y,z)=A^{∗}(d1,d3,d4) lauten.

Das bedeutet, die Dimensionen eins, drei und vier werden im 3D Raum abgebildet.

Die Dimension d2 kann dabei beispielsweise beliebige Werte aufweisen, wohingegen die Dimension d5 auf den Wert 7 fixiert sein kann. Die Dimension d6 kann Werte zwischen 2 und 4 (2 <= d6 <= 4) aufweisen.

Das bedeutet, daß in der Projektion nur Datenpunkte enthalten sind, die in der Dimension d5 den Wert 7 aufweisen und in der Dimension d6 Werte zwischen 2 und 4.

Wird die Darstellung von einem Computersystem übernommen, so können beispielsweise die Werte oder Wertebereiche der einzelnen Dimensionen per Auswahlbox oder Schieberegler interaktiv in einer GUI ausgewählt und eingestellt werden.

Die grafische Ausgabe wird dann entsprechend den Vorgaben oder den jeweiligen Auswahlen neu erstellt. Idealerweise wird die Grafik instantan an die veränderten Parameter angepasst.

Ebenso wie die Werte oder Wertebereiche angepasst und ausgewählt werden können, ist es denkbar, daß genauso die jeweiligen Dimensionen ausgewählt werden können.

Aufeinanderfolgende oder zusammengehörige Daten können in der Darstellung mit Linien miteinander verbunden werden.

Auch Parallelprojektionen sind denkbar.

Auf diese Art und Weise können "Ausreißer", das heißt, Abweichungen vom normalen Verlauf oder den normalen Daten schnell und sicher erkannt werden.

Es ist dabei auch denkbar, daß Ausreißer außerhalb eines vorgegebenen oder einstellbaren Datenkorridors farblich markiert werden.

Ist eine solche Abweichung identifiziert, so kann der entsprechende Datensatz bzw. die entsprechenden Datensätze näher betrachtet werden und die Abweichung eingegrenzt werden.

Aufwendige Analysen und Vergleiche per Hand mittels Durchsicht von Log-Dateien kann entfallen.

Zusätzlich besteht die Möglichkeit, Messpunkte und Verbindungslinien entsprechend der Verarbeitungszeit einzufärben. Denkbar ist dabei, daß hierfür die Regenbogenfarben verwendet werden. Damit kann auf einfache Art und Weise die Verarbeitungszeit von bestimmten, in der jeweiligen Projektion dargestellten Informationen, Datenpaketen, Routinen usw. visualisiert werden.

Es ist dabei sehr leicht erkennbar, ob eine lange oder kurze Verarbeitung vorkommt und wie sich diese Verarbeitungszeiten verteilen. Mit Hilfe statistischer Betrachtungen können dann Rückschlüsse hinsichtlich den Ursachen gezogen werden.

Zudem kann so erkannt werden, ob bzw. wie die Verarbeitungszeiten in verschiedenen Ebenen miteinander korreliert sind.

## Patentansprüche

1. Verfahren zur Verfolgung des Programmverlaufes, des Informationsflusses und/oder des Zusammenspiels von Teilnehmern in einem verteilten System aus programmierbaren Steuerungen und/oder datenverarbeitenden Systemen, wobei das Verfahren vorsieht, daß an zuvor definierten Stellen des Systemes Zeitstempel generiert und gespeichert werden, daß die Zeitstempel die jeweilige Uhrzeit, den Ort, den Ereignistyp, eine fortlaufende Nummer und wahlweise andere Angaben enthalten, daß die Zeitstempel hardwarebasiert generiert werden und in einem Zwischenspeicher abgelegt werden, daß die Zeitstempel ausgelesen werden und softwaregestützt analysiert werden, daß die Zeitstempel eines Systems grafisch aufbereitet und zwei oder dreidimensional dargestellt werden und daß mehr als dreidimensionale Zeitstempel auf ein 2D oder 3D System projiziert werden und daß die Zeitstempelgenerierung als atomare Schreib-Operation in der jeweiligen Hardware hinterlegt ist und in ein dafür vorgesehenes Register erfolgt.

2. Verfahren nach einem der vorangehenden Ansprüchen, **dadurch gekennzeichnet, daß** logisch aufeinander folgende Zeitstempel miteinander verknüpft werden.

3. Verfahren nach Anspruch 2 , **dadurch gekennzeichnet, daß** bei einer grafischen Darstellung eine Verbindung mit Linien vorgenommen wird.

4. Verfahren nach Anspruch 2 oder 3, **dadurch gekennzeichnet, daß** die Linien farblich codiert dargestellt werden.

5. Verfahren nach einem der vorangehenden Ansprüche, **dadurch gekennzeichnet, daß** die bei der Projektion unberücksichtigt bleibenden Werte und/oder Wertebereiche der weggelassenen Dimensionen auswählbar sind.

6. Verfahren nach einem der vorangehenden Ansprüche, **dadurch gekennzeichnet, daß** einzelne Informationen der Zeitstempel projiziert werden.

## Claims

1. Method for tracking program progress, information flow and/or interaction of participants in a distributed system of programmable controls and/or data-processing systems, wherein the method provides that time stamps are generated and stored at predefined points of the system, the time stamps contain the respective clock time, location, event type, a consecutive number and selectably other details, the time stamps are generated on a hardware basis and filed in an intermediate memory, the time stamps are read out and analysed with software assistance, the time stamps of a system are prepared graphically and illustrated two-dimensionally or three-dimensionally and more than three-dimensional time stamps are projected on a two-dimensional or three-dimensional system, and the time stamp generation is filed as an atomic writing operation in the respective hardware and carried out in a register provided for that purpose.

2. Method according to the preceding claim, **characterised in that** logically successive time stamps are interlinked.

3. Method according to claim 2, **characterised in that** a connection with lines is undertaken for a graphical illustration.

4. Method according to claim 2 or 3, **characterised in that** the lines are illustrated with colour coding.

5. Method according to any one of the preceding claims, **characterised in that** the values and/or value ranges, which are excluded from consideration in the projection, of the omitted dimensions are selectable.

6. Method according to any one of the preceding claims, **characterised in that** individual items of information of the time stamps are projected.

## Revendications

1. Procédé de suivi du déroulement de programme, du flux d'informations et/ou de l'interaction de participants dans un système distribué comprenant des commandes programmables et/ou des systèmes de traitement de données, ledit procédé prévoyant que des horodatages soient créés et mémorisés en des points préalablement définis dudit système ; que les horodatages contiennent l'heure respective, le lieu, le type d'événement, un numéro séquentiel et, sélectivement, d'autres indications ; que lesdits horodatages soient créés sur la base d'un matériel informatique, et soient stockés dans une mémoire intermédiaire ; que lesdits horodatages soient lus et analysés avec l'assistance d'un logiciel ; que les horodatages d'un système soient élaborés graphiquement, et affichés sous forme bidimensionnelle ou tridimensionnelle ; que des horodatages extratridimensionnels soient projetés sur un système 2D ou 3D ; et que la création d'horodatages soit consignée en tant qu'opération d'écriture atomique, dans le matériel informatique respectif, et soit effectuée dans un registre prévu à cette fin.

2. Procédé selon l'une des revendications précédentes, **caractérisé par** une combinaison mutuelle d'horodatages en succession logique.

3. Procédé selon la revendication 2, **caractérisé par le fait qu'**une liaison est instaurée par des lignes dans le cas d'un affichage graphique.

4. Procédé selon la revendication 2 ou 3, **caractérisé par le fait que** les lignes sont représentées avec codage en couleur.

5. Procédé selon l'une des revendications précédentes, **caractérisé par** une faculté de sélectionner les valeurs demeurant non prises en compte lors de la projection, et/ou des plages de valeurs des dimensions omises.

6. Procédé selon l'une des revendications précédentes, **caractérisé par** une projection d'informations individuelles des horodatages.
